(19) **Europäisches Patentamt / European Patent Office / Office européen des brevets**

(11) **EP 2 694 803 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **12714964.9**

(22) Anmeldetag: **04.04.2012**

(51) Int Cl.:
*F03B 13/14* (2006.01)  *F16H 61/4096* (2010.01)
*F16H 61/44* (2006.01)  *F03D 15/00* (2016.01)
*F03D 9/28* (2016.01)

(86) Internationale Anmeldenummer:
**PCT/EP2012/001489**

(87) Internationale Veröffentlichungsnummer:
**WO 2012/136359 (11.10.2012 Gazette 2012/41)**

(54) **HYDRAULISCH ELEKTRISCHER WANDLER, WANDLERANORDNUNG UND VERFAHREN ZUM ANSTEUERN EINES WANDLERS**

HYDRAULIC-ELECTRICAL CONVERTER, TRANSDUCER ARRANGEMENT AND METHOD FOR DRIVING A CONVERTER

CONVERTISSEUR HYDROÉLECTRIQUE, ENSEMBLE CONVERTISSEUR ET PROCÉDÉ DE PILOTAGE D'UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011 DE 102011016592**

(43) Veröffentlichungstag der Anmeldung:
**12.02.2014 Patentblatt 2014/07**

(73) Patentinhaber: **Robert Bosch GmbH**
**70442 Stuttgart (DE)**

(72) Erfinder: **VERDEGEM, Louis**
**Peterborough PE3 6SS (GB)**

(74) Vertreter: **Thürer, Andreas**
**Bosch Rexroth AG**
**BR/IPR**
**Zum Eisengiesser 1**
**97816 Lohr am Main (DE)**

(56) Entgegenhaltungen:
WO-A2-2011/011682   DE-A1-102007 018 600
DE-A1-102007 056 400   DE-A1-102008 021 111
JP-A- 2002 142 498

EP 2 694 803 B1

**Beschreibung**

Die Erfindung betrifft einen hydraulisch elektrischen Wandler gemäß dem Oberbegriff des Patentanspruches 1, eine Wandleranordnung mit einem derartigen Wandler sowie ein Verfahren zum Ansteuern eines derartigen Wandlers.

Derartige Wandler werden beispielsweise bei Wellenenergieanlagen eingesetzt, wie sie in der US 6,300,698 beschrieben sind. Dieser bekannte Wellenenergieanlage hat einen Hydrozylinder, der mit einer Boje in Wirkverbindung steht, so dass der Hydrozylinder durch den Wellengang und die entsprechende Bewegung der Boje betätigt wird und somit als Pumpe Druckmittel in einen Hydraulikkreis fördert, so dass ein nachgeschalteter Hydrospeicher und eine Hydromaschine aufgeladen bzw. angetrieben werden können. Eine Abtriebswelle dieser Hydromaschine ist mit einem Generator verbunden, so dass die hydraulische Energie in elektrische Energie umgewandelt wird. Da der Wellengang sowohl hinsichtlich der Wellenhöhe als auch der Frequenz stark variiert, muss eine aufwendige elektronische Schaltung zur Vergleichmäßigung der GeneratorAusgangsspannung vorgesehen werden.

In der DE 10 2007 018 600 A1 wird ein verbesserter Wandler vorgeschlagen, bei dem die Hydromaschine mit verstellbarem Förder-/Schluckvolumen ausgeführt ist und drehzahlgeregelt betrieben wird, um die genannten Schwankungen der Wellenbewegung, die in entsprechenden Schwankungen der abgegriffenen elektrischen Leistung resultieren, zu vergleichmäßigen.

In der DE 10 2008 021 576 A1 der Anmelderin ist ein entsprechender Wandler offenbart, bei dem dem Schwingkörper (Boje) zur Vermeidung von übermäßigen mechanischen Belastungen eine Bremseinrichtung zugeordnet ist, so dass der Schwingkörper bei Überschreiten einer vorbestimmten Beschleunigung, Frequenz oder Geschwindigkeit abgebremst werden kann.

In der DE 10 2007 056 400 ist ein Wandler gezeigt, bei dem die Hydromaschine derart verstellbar ist, dass der Kolben des als Pumpe wirkenden Hydrozylinders mit einer vorbestimmten Dämpfungskraft und einer vorbestimmten Druckdifferenz beaufschlagt ist. Auch bei dieser Lösung wird ein Hydrospeicher über die Pumpe aufgeladen.

Bei dem zuvor erläuterten Stand der Technik ist der Wandler Teil einer Wellenenergieanlage - die Erfindung ist jedoch keinesfalls auf derartige Anwendungen begrenzt. Prinzipiell kann ein derartiger Wandler auch bei anderen, vorzugsweise von einer Naturkraft angetriebenen Systemen verwendet werden. So kann die Pumpe auch über ein Windrad, einen Tidenhub oder dergleichen angetrieben werden.

Ein hydraulisch-elektrischer Wandler, bei dem die Pumpe von dem Rotor einer Windkraftanlage angetrieben wird, ist aus der gattungsgemäßen WO 2011/ 011682 A2 bekannt. Die Pumpe versorgt dort über eine Druckleitung einen Hydromotor oder mehrere parallel zueinander angeordnet Hydromotoren mit Druckmittel. An die Druckleitung ist ein Hydrospeicher angeschlossen.

Ein im Prinzip gleich aufgebauter hydraulisch-elektrischer Wandler ist durch die JP 2002142498 A bekannt. Dort wird eine Pumpe von Wellen angetrieben und versorgt über zwei Druckleitungen jeweils einen Hydromotor mit Druckmittel. An jede Druckleitung ist ein Hydrospeicher angeschlossen.

All die vorgenannten Wandler haben das Problem gemeinsam, dass aufgrund der genannten Ungleichmäßigkeiten der Wellenbewegungen oder des eine Windenergieanlage antreibenden Windes entsprechend auch die am Generator abgreifbare elektrische Leistung schwankt, so dass ein weitgehend gleichmäßiger Leistungsabgriff nur mit erheblichem reglungstechnischen Aufwand realisiert werden kann.

Ein weiteres Problem derartiger mit einem Hydrospeicher ausgeführter Wandler besteht darin, dass das Aufladen des Hydrospeichers nur dann möglich ist, wenn der von der Pumpe erzeugte Druck höher als der Druck im Hydrospeicher ist. Der Maximaldruck des Hydrospeichers begrenzt bei diesen Systemen auch den Systemdruck, so dass eine vollständige Umsetzung der im antreibenden Medium gespeicherten Energie

(Wellenenergie, Windenergie, ...) in elektrische Energie nicht möglich ist. Dieses Problem wird noch dadurch verstärkt, dass aufgrund des vergleichsweise limitierten Hydrospeicherdrucks eine hydraulische Dämpfung der von der Wellenenergie oder der Windenergie angetriebenen Pumpe nur im begrenzten Umfang möglich ist.

Prinzipiell besteht noch die Möglichkeit, anstelle eines mit einem Hydrospeicher ausgeführten Wandlers die von der Wellenenergie oder der Windenergie angetriebene Pumpe direkt an eine verstellbare Hydromaschine anzukoppeln, die ihrerseits einen Generator antreibt oder den Generator direkt mit dem Schwingkörper zu koppeln. Ein derartiges System ist beispielsweise aus dem "Wave-Swing"-Projekt bekannt. Nachteilig bei derartigen direkt gekoppelten Systemen ist, dass der Leistungsabgriff ebenfalls in Abhängigkeit von den Schwankungen der Naturkraft (Wellenenergie, Windenergie, ...) schwankt und zur Speicherung der Energie bei einem Energieüberschuss Schwungräder oder dergleichen verwendet werden müssen, die wiederum einen erheblichen Bauraum erfordern und darüber hinaus den vorrichtungstechnischen Aufwand erhöhen.

Die über einen derartigen PTO (Power Take Off - Vorrichtung) abgegriffene kinetische Leistung ist im Prinzip das Produkt aus einer Dämpfungskraft auf die Bewegung des PTO und die Bewegungsgeschwindigkeit. Um einen optimalen Leistungsabgriff zu erhalten, muss die Dämpfungskraft und die Bewegungsgeschwindigkeit während des Wellenzyklus variiert und umgekehrt werden, um eine optimale Anpassung an die jeweilige Bewegungsgeschwindigkeit des Schwimmkörpers oder dergleichen durchzuführen. Demgemäß muss bei derartigen Wandlern die Dämpfungskraft und die Bewegungsgeschwindigkeit geregelt werden, um den optimalen Leistungsabgriff zu ermöglichen. Bei Wellenenergieanlagen variiert dieser Leistungsabgriff dementsprechend während jedes Wellenzyklus zweimal zwischen den Maximalwerten im Wellenscheitel bzw. im Wellengang und den dazwischen liegenden beiden Nulldurchgängen.

Demgegenüber liegt der Erfindung die Aufgabe zugrunde, einen hydraulisch elektrischen Wandler, eine Wandleranordnung mit einem derartigen Wandler und ein Verfahren zum Ansteuern eines derartigen Wandlers zu schaffen, die einen vergleichmäßigten Leistungsabgriff auch bei Schwankungen der eingetragenen Leistung oder Energie ermöglichen.

Diese Aufgabe wird im Hinblick auf den hydraulisch elektrischen Wandler durch die Merkmalskombination des Patentanspruches 1, bezüglich der Wandleranordnung durch die Merkmalskombination des Patentanspruches 9 und hinsichtlich des Verfahrens durch die Merkmalskombination des nebengeordneten Patentanspruches 10 gelöst.

Vorteilhafte Weiterbildungen der Erfindung sind Gegenstand der Unteransprüche.

Der erfindungsgemäße hydraulisch elektrische Wandler hat eine - vorzugsweise von einer Naturkraft - angetriebene Einheit mit einer Pumpe, im Folgenden PTO (Power-Take-Off) genannt. Diesem PTO ist eine Hydrospeichereinheit zugeordnet, die in Wirkverbindung mit einer Hydromaschine steht, die eine elektrische Maschine, vorzugsweise einen Generator antreibt. Erfindungsgemäß ist eine zweite Hydromaschine vorgesehen, über die die elektrische Maschine ebenfalls antreibbar ist, wobei das Förder-/Schluckvolumen der beiden Hydromaschinen zur Vergleichmäßigung der abgegriffenen elektrischen Leistung verstellbar ist. Durch diese Verstellung der beiden Hydromaschinen wird bei dem erfindungsgemäßen Wandler ein auf die Pumpe wirkender Dämpfungsdruck derart eingestellt, dass Schwankungen der die Pumpe antreibenden Naturkraft vergleichmäßigt werden können. Durch geeignete Ansteuerung der beiden Hydromaschinen kann des Weiteren die Druckmittelströmung von und zum Hydrospeicher zur Vergleichmäßigung der abgegriffenen elektrischen Leistung geregelt werden.

Die verstellbaren Hydromaschinen sind vorzugweise so ausgeführt, dass sie im Vier-Quadrantenbetrieb bei konstanter Drehrichtung und Drehgeschwindigkeit ihrer Abtriebswelle betrieben werden können.

Durch eine derartige Schaltung ist es beispielsweise möglich, dass die zweite Hydromaschine als Motor betrieben wird, wenn das von der ersten Hydromaschine gelieferte Drehmoment nicht ausreichend ist, um den Generator mit einem vorbestimmten Drehmoment zu beaufschlagen. Die zweite Hydromaschine kann aber auch als Pumpe betrieben werden, wenn über die erste Hydromaschine ein Drehmomentüberschuss bereit gestellt wird, so dass über die zweite Hydromaschine ein Aufladen des Hydrospeichers erfolgt. Dieser kann dann zu einem späteren Zeitpunkt zum Antreiben des Generators entladen werden.

Die erfindungsgemäße Wandleranordnung hat mehrere derartiger Wandler, wobei diesen Wandlern eine gemeinsame Hydrospeichereinheit zugeordnet ist.

Bei dem erfindungsgemäßen Verfahren zum Ansteuern des hydraulisch elektrischen Wandlers wird das Förder-/Schluckvolumen der beiden Hydromaschinen in Abhängigkeit von dem Druckmittelvolumenstrom von oder zu der Pumpe, dem Druckmittelvolumenstrom von oder zu der Hydrospeichereinheit, dem Druckmittelvolumenstrom vom oder zu einem Tank, dem Ausgangsdruck der Pumpe, dem Druck der Hydrospeichereinheit, dem Tankdruck, den Drehzahlen der Hydromotoren und der elektrischen Maschine (Generator) oder den Drehmomenten an den Hydromaschinen und am Generator eingestellt.

Bei einem Ausführungsbeispiel des Wandlers sind die beiden Hydromaschinen in Reihe geschaltet, wobei die zweite Hydromaschine stromaufwärts der ersten Maschine angeordnet ist und die Hydrospeichereinheit mit dem Druck zwischen der ersten und der zweiten Hydromaschine beaufschlagt ist.

Erfindungsgemäß kann ein Niederdruckanschluss der ersten Hydromaschine mit einem Tank oder mit Niederdruck verbunden sein.

Bei einem Ausführungsbeispiel der Erfindung kann ein weiterer PTO vorgesehen sein, dem eine dritte Hydromaschine zugeordnet ist, die ebenfalls mit der elektrischen Maschine in Wirkverbindung steht. Diese dritte Hydromaschine ist vorzugsweise hydraulisch parallel zur zweiten Hydromaschine geschaltet, wobei die erste Hydromaschine sowohl der zweiten Hydromaschine als auch der dritten Hydromaschine zugeordnet ist und somit jeweils zu diesen in Reihe geschaltet wird.

Bei einer Variante der Erfindung kann der Hydrospeichereinheit eine elektrische Zusatzeinheit mit einem Zusatzgenerator und einer Zusatzhydromaschine zugeordnet sein, die unabhängig von den eingangs beschriebenen Hydromaschinen über die Hydrospeichereinheit antreibbar sind.

Zumindest die zweite Hydromaschine kann in einem offenen oder geschlossenen hydraulischen Kreislauf angeordnet sein.

Im Falle eines geschlossenen Kreislaufes kann zum Ausgleich von Leckagen eine Ladepumpe vorgesehen werden.

Wie erwähnt, kann der PTO wellen-, windgetrieben oder von einer sonstigen erneuerbaren Energie angetrieben sein.

Die Hydrospeichereinheit kann aus mehreren parallel geschalteten Hydrospeichern (Hydrospeicherbank) bestehen.

Bei dem Verfahren zum Ansteuern eines hydraulisch elektrischen Wandlers kann die Einstellung des Förder-/Schluckvolumens der Hydromaschinen derart erfolgen, dass zunächst ein aktuelle Druckmittelvolumenstrom am Ausgang der Pumpe bestimmt wird. In Abhängigkeit von diesem Ausgangswert der PTO wird dann das Förder-/Schluckvolumen der ersten Hydromaschine berechnet und daraus der entsprechende momentane Dämpfungsdruck bestimmt, der am Ausgang der Pumpe des PTO eingestellt werden muss. Darüber hinaus wird der Druck in der Hydrospeichereinheit bestimmt und aus der Druckdifferenz zwischen dem zuvor bestimmten Dämpfungsdruck und einem Tankdruck des Systems und des bestimmten Förder-/Schluckvolumens der ersten Hydromaschine das Drehmoment der ersten Hydroeinheit bestimmt. Aus der gewünschten Leistungsabgabe der elektrischen Maschine und dem zuvor berechneten Drehmoment der ersten Hydromaschine wird dann das Förder-/Schluckvolumen der zweiten Hydromaschine derart eingestellt, dass sich an der elektrischen Maschine das gewünschte Drehmoment und somit die gewünschte Leistung einstellt. Dieser Algorithmus wird ständig wiederholt, so dass auch bei stark schwankender in den PTO eingetragener kinetischer Energie an der elektrischen Maschine eine weitestgehend konstante elektrische Leistung abgegriffen werden kann.

Bevorzugte Ausführungsbeispiele der Erfindung werden im Folgenden anhand schematischer Zeichnungen näher erläutert. Es zeigen:

Figur 1 ein Schaltschema eines ersten Ausführungsbeispiels eines hydraulisch elektrischen Wandlers;

Figur 2 ein Diagramm zur Veranschaulichung der über den PTO eingetragenen kinetischen Leistung und der an einer elektrischen Maschine abgegriffenen vergleichmäßigten elektrischen Leistung;

Figur 3 ein zweites Ausführungsbeispiel eines Wandlers mit zwei PTOs;

Figur 4 ein drittes Ausführungsbeispiel eines Wandlers mit einer zusätzlichen Generator-Hydromaschineneinheit;

Figur 5 einen Wandler mit geschlossenem hydraulischen Kreislauf;

Figur 6 eine alternative Ausführungsform zu dem Wandler gemäß Figur 5;

Figur 7 ein Ausführungsbeispiel einer Wandleranordnung mit zwei Wandlern ähnlich der Ausführung in Figur 3

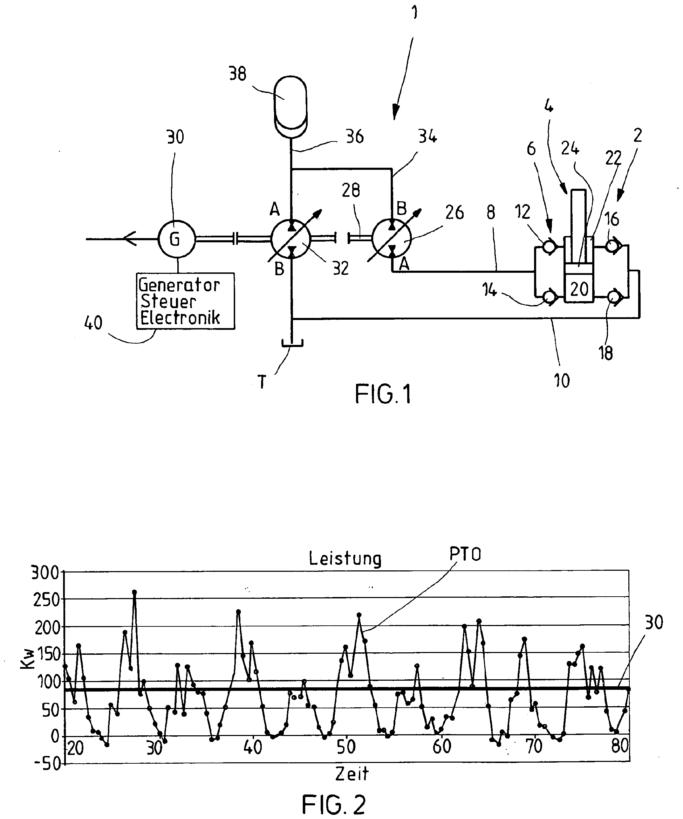

Figur 1 zeigt ein stark vereinfachtes Schaltschema eines ersten Ausführungsbeispiels eines erfindungsgemäßen Wandlers 1, über den kinetische Energie, beispielsweise Wellenenergie, ein Tidenhub oder Windenergie in elektrische Energie umgewandelt wird. Zur Vereinfachung der Beschreibung sind für die Erfindung nicht wesentliche Bauelemente, wie beispielsweise Sensoren zur Erfassung von Drücken, Volumenströmen, Drehmomenten, Drehgeschwindigkeiten, hydraulische Regel-/Steuerelemente und Steuerölpumpen, etc. weggelassen und nur die erfindungswesentlichen Bauelemente dargestellt.

Wie bereits eingangs erwähnt, hat beispielsweise eine Wellenenergieanlage einen PTO 2 mit einem in Figur 1 nicht dargestellten Schwimmkörper (Boje), der durch den Wellengang eine oszillierende Bewegung durchführt, die über nicht dargestellte Übertragungsmittel auf eine Pumpe 4 übertragen wird, die im Ausführungsbeispiel gemäß Figur 1 als Differentialzylinder ausgeführt ist. Der PTO 2 kann auch - wie in der Druckschrift DE 10 2009 016 916 A1 erläutert - als so genannte Wellenplatte ausgeführt sein, die durch die Wellenbewegung verschwenkt wird.

Bei einem Wandler für eine Windenergieanlage würde, wie im Folgenden näher erläutert - der PTO 2 mit einem Windrad ausgeführt sein, das entsprechend die Pumpe antreibt.

Die Druckräume des Hydrozylinders (Pumpe 4) gemäß Figur 1 sind über einen hydraulischen Gleichrichter 6 einerseits mit einer Druckleitung 8 und einer Tankleitung 10 verbunden. Letztere mündet in einen Tank T ein. Beim dargestellten Ausführungsbeispiel ist der hydraulische Gleichrichter durch eine Rückschlagventilanordnung mit vier Rückschlagventilen 12, 14, 16, 18 ausgeführt, wobei ein bodenseitiger Druckraum 20 des Hydrozylinders über die Rückschlagventile 14, 18 und ein Ringraum 22 des Hydrozylinders über die beiden anderen Rückschlagventile 12, 16 mit der Druckleitung 8 bzw. der Tankleitung 10 verbunden sind. Diese Rückschlagventile 12, 14, 16, 18 sperren jeweils die Druckmittelströmung von der Druckleitung 8 bzw. der Tankleitung 10 in Richtung der zugeordneten Druckräume 20, 22 ab. Durch diese Rückschlagventilanordnung wird somit unabhängig von der Bewegungsrichtung eines Kolbens 24 des Hydrozylinders Druckmittel in die Druckleitung 8 gefördert und aus der Druckleitung 10 angesaugt.

Die Druckleitung 8 ist an einen Anschluss A einer Hydromaschine angeschlossen, die im Folgenden als zweite oder stromaufwärtige Hydromaschine 26 bezeichnet wird. Diese kann beispielsweise als Radial- oder Axialkolbenmaschine ausgeführt sein und kann im Vier-Quadrantenbetrieb mit Drehmoment- und Drehzahlumkehrung betrieben werden. Eine Abtriebswelle 28 der zweiten Hydromaschine 26 treibt eine elektrische Maschine an, die im Folgenden als Generator 30 bezeichnet wird. Mittelbar oder unmittelbar mit der Abtriebswelle 28 ist eine erste Hydromaschine 32 gekoppelt, deren Bauweise derjenigen der zweiten Hydromaschine 26 entsprechen kann. D.h. auch die erste Hydromaschine 32 erlaubt eine Umkehrung der Drehrichtung und des Drehmomentes. Ein Eingangsanschluss A der ersten Hydromaschine 32 ist über eine Zulaufleitung 34 mit dem Ausgangsanschluss B der zweiten Hydromaschine 26 verbunden. Von der Zulaufleitung 34 zweigt eine Speicherleitung 36 ab, die zu einer Hydrospeichereinheit 38 führt. Diese Hydrospeichereinheit 38 kann aus mehreren parallel geschalteten Hydrospeichern ausgeführt sein, die beispielsweise als Gasdruckspeicher oder als Federspeicher ausgeführt sein können.

Ein Niederdruckanschluss B der ersten Hydromaschine 32 ist ebenfalls an die Tankleitung 10 angeschlossen.

Wie im Folgenden noch näher beschrieben wird, werden die Förder-/Schluckvolumina der beiden Hydromaschinen 26, 32 über eine Steuereinheit 40 derart verstellt, dass am Generator 30 nicht die vorbeschriebene, der Wellenform folgende schwankende elektrische Leistung abgegriffen wird, sondern ein gleichmäßiger Leistungsabgriff erfolgt, wobei dies durch Einstellung der Dämpfungskraft in der Druckleitung 8 und damit der Bewegungsgeschwindigkeit des PTO 2 erfolgt.

Diese erfindungsgemäße Steuerung wird im Folgenden erläutert. In einem ersten Verfahrensschritt wird der aktuelle, über die Pumpe 4 des PTO 2 in der Druckleitung 8 erzeugte Druckmittelvolumenstrom FlowW zum bzw. von der Pumpe 4 bestimmt. Dieser aktuelle Volumenstrom FlowW kann entweder gemessen werden oder über Algorithmen aus der Bewegung des PTO vorbestimmt werden.

In einem folgenden Schritt wird das Förder-/Schluckvolumen der ersten Hydromaschine 32 nach der Formel 1 bestimmt,

$$\text{Disp1} = \text{FlowW x 1000 / Speed} \qquad\qquad \text{Formel 1}$$

wobei Disp1 das Förder-/Schluckvolumen der ersten Hydromaschine 32 in cm$^3$ pro Umdrehung und Speed die Drehgeschwindigkeit der Abtriebswelle 28 in Umdrehungen pro Minute sind.

In einem dritten Schritt wird die erforderliche Dämpfungskraft Press1 aus vorgegebenen Algorithmen bestimmt.

Desweiteren wird der Druck in der Hydrospeichereinheit 38 bestimmt und dann das von der ersten Hydromaschine 32 aufzubringende Drehmoment Torque1 nach der folgenden Formel berechnet.

$$\text{Torque1} = \text{Disp1 x (Press1} - \text{Press2) / (20 x } \pi) \qquad\qquad \text{Formel 2}$$

Der gewünschte Leistungsabgriff des Systems bestimmt das auf den Generator 30 wirkende Drehmoment TorqueGen nach der Formel

$$\text{Power Output} = 2 \text{ x } \pi \text{ x TorqueGen x Speed / 60000} \qquad\qquad \text{Formel 3}$$

berechnet, wobei "Power Output" der Leistungsabgriff am Generator 30 ist.

Um diesen Leistungsabgriff zu erreichen, wird das Förder- oder Schluckvolumen der zweiten Hydromaschine 26 so eingestellt, dass sich aus der Summe der über die beiden Hydromaschinen 32, 26 eingetragenen Drehmomente zu dem gewünschten Drehmoment am Generator 30 summiert. Dieses Drehmomentgleichgewicht wird durch die Formel

$$\text{TorqueGen} = \text{Torque1} + \text{Torque2} \qquad\qquad \text{Formel 4,}$$

wobei sich Torque2 nach der folgenden Formel berechnet:

$$\text{Torque2} = \text{Disp2 x (Press2} - \text{PressT) / (20 x } \pi) \qquad\qquad \text{Formel 5}$$

Hierbei steht Press2 für den Druck in der Hydrospeichereinheit 38 und und PressT für den Tankdruck, der beispielsweise im Bereich von 4 bis 5 bar liegen kann.

In einem folgenden Regelschritt wird dann über die Gleichung

$$\text{FlowB} = \text{Disp2 x Speed / 1000} \qquad\qquad \text{Formel 6}$$

der Druckmittelvolumenstrom über die zweite Hydromaschine 26 bestimmt und schließlich gemäß der Gleichung

$$FlowA = FlowW - FlowB \qquad \text{Formel 7}$$

der Nettovolumenstrom in die Hydrospeichereinheit 38 oder aus der Hydrospeichereinheit und somit der Ladezustand der Hydrospeichereinheit 38 bestimmt.

Auf diese Weise kann die in Abhängigkeit von der Wellenbewegung oder einer sonstigen Naturkraft schwankende kinetische Energie des PTO in eine im wesentlichen konstante elektrische Leistung umgewandelt werden, die am Generator 30 abgegriffen wird.

Dies wird anhand Figur 2 erläutert. Diese zeigt ein Diagramm, in dem die vom PTO 2 dem Wandler 1 zugeführte kinetische Eingangsleistung mit der am Generator 30 abgegriffenen elektrischen Leistung verglichen wird. Man erkennt, dass die über den PTO 2 eingetragene Leistung entsprechend der Wellenbewegung trotz des Gleichrichters 6 relativ stark schwankt, die am Generator 30 abgegriffene Leistung jedoch im Wesentlichen konstant bleibt, wobei der Ladezustand der Hydrospeichereinheit 38 jeweils optimal auf die in das System eingetragene Leistung abgestimmt ist. Bei der vorbeschriebenen Regelstrategie variiert somit der Druck Press2 in der Hydrospeichereinheit 38 und somit auch die Druckdifferenz über der Hydromaschine 32 in Abhängigkeit von der am PTO eingetragenen Eingangsleistung.

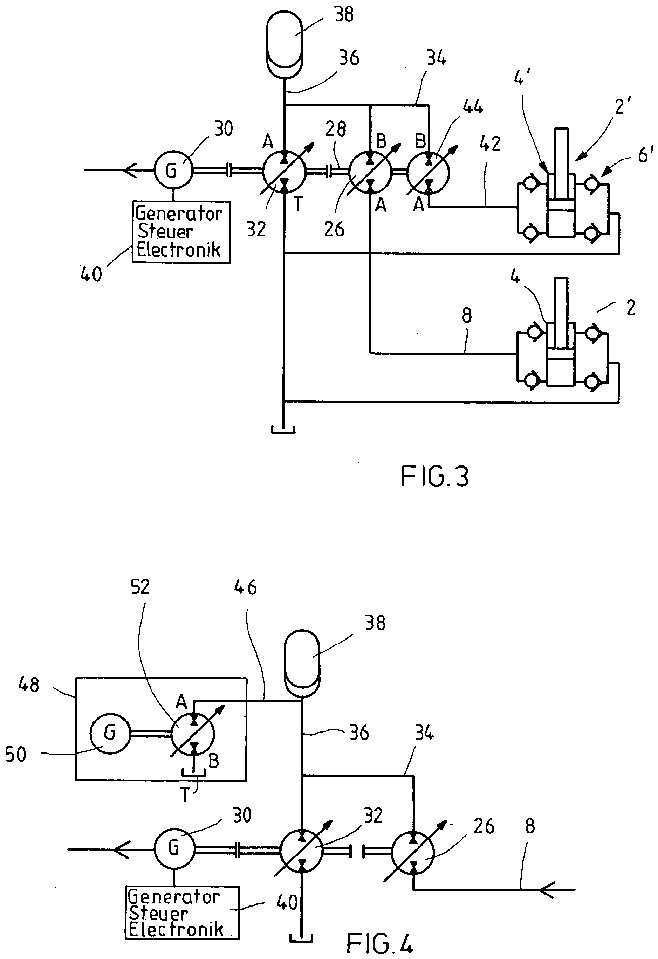

Figur 3 zeigt eine Variante des Ausführungsbeispiels gemäß Figur 1, wobei zwei PTOs 2, 2' parallel geschaltet sind. Jeder dieser PTOs 2, 2' ist gemäß Figur 1 mit einer Pumpe 4 bzw. 4' ausgeführt. Die Verschaltung der Pumpe 4 mit den beiden Hydromaschinen 26, 32, der Hydrospeichereinheit 38 und dem Generator 30 entspricht dem Ausführungsbeispiel gemäß Figur 1, so dass diesbezüglich auf die vorstehenden Ausführungen verwiesen wird. Die Pumpe 4' des weiteren PTO 2' ist wiederum als Hydrozylinder mit einem hydraulischen Gleichrichter 6 in der vorbeschriebenen Bauweise ausgeführt. Die Druckseite der Hydropumpe 4' ist über eine weitere Druckleitung 42 an einen Eingangsanschluss A einer dritten Hydromaschine 44 angeschlossen, die ebenfalls mit der Abtriebswelle 28 in Wirkverbindung steht und somit einen Drehmomentanteil beiträgt. Ein Anschluss B der dritten Hydromaschine 44 ist an die Zulaufleitung 34 angeschlossen, so dass eine Druckmittelverbindung des Anschlusses B der dritten Hydromaschine 44 mit dem Anschluss B der zweiten Hydromaschine 26 und mit der Hydrospeichereinheit 38 sowie dem Anschluss A der ersten Hydromaschine 32 besteht. Demgemäß sind die erste Hydromaschine 32 und die Hydrospeichereinheit 38 sowie der Generator 30 beiden PTOs 2, 2' zugeordnet. Die Steuerung der Dämpfungskraft in den Druckleitungen 8, 42 sowie der Bewegungsgeschwindigkeiten der PTO erfolgt nach dem vorbeschriebenen Regelalgorithmus.

Figur 4 zeigt eine Variante des Ausführungsbeispiels gemäß Figur 1, wobei von der Speicherleitung 36 eine Speicherzweigleitung 46 abzweigt, die eine weitere Motor-Generatoreinheit 48 mit Druckmittel versorgt. Diese Motor-Generatoreinheit 48 besteht im Prinzip aus einem Zusatzgenerator 50 und einer Zusatzhydromaschine 52, die über einen Anschluss A mit der Speicherzweigleitung 46 und über einen Anschluss B mit dem Tank T verbunden ist. Der Aufbau des Zusatzgenerators 50 und der Zusatzhydromaschine 52 kann den entsprechenden Bauelementen der vorbeschriebenen Ausführungsbeispiele entsprechen.

Diese zusätzliche Motor-Generatoreinheit 48 wird über die Steuereinheit 40 dann angesteuert, wenn die über den PTO 2 eingetragene Leistung die am Generator 30 abgegriffene Leistung übersteigt und die Hydrospeichereinheit 38 entsprechend aufgeladen ist. Bei den vorbeschriebenen Ausführungsbeispielen wird zumindest die Pumpe 4, 4' und die zugeordnete Hydromaschine 26, 44 in einem offenen hydraulischen Kreislauf betrieben.

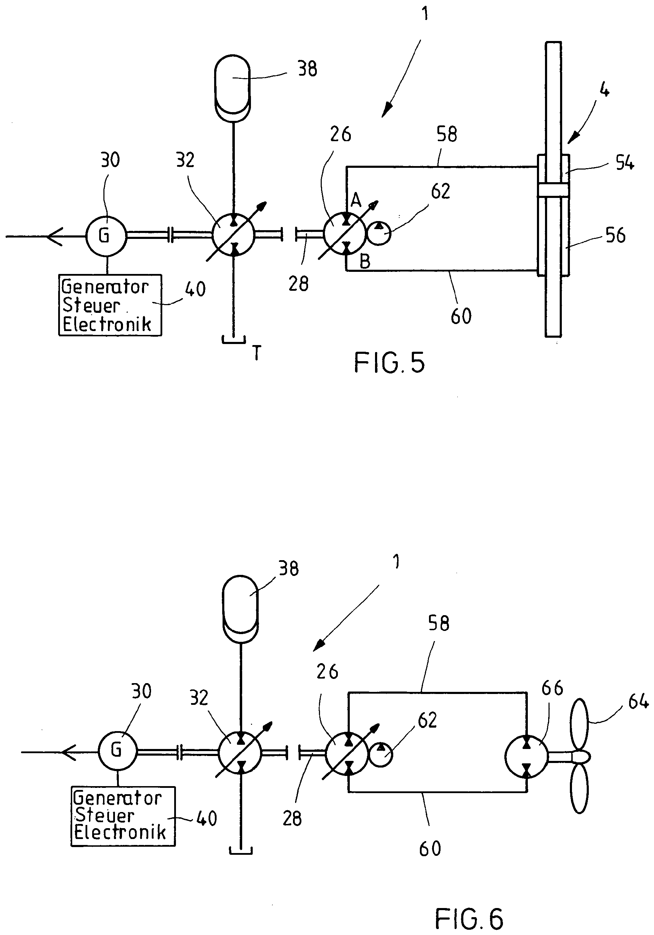

Figur 5 zeigt einen Wandler, bei dem die Pumpe 4 und die zweite Hydromaschine 26 in einem geschlossenen hydraulischen Kreislauf betrieben werden, der in der Abbildung gemäß Figur 5 äußerst stark vereinfacht dargestellt ist. Beim dargestellten Wandler ist die Pumpe 4 als Gleichgangzylinder ausgeführt, dessen mit gleichem Querschnitt ausgeführte Druckräume 54, 56 über einen nicht dargestellten hydraulischen Gleichrichter und Arbeitsleitungen 58, 60 mit den Anschlüssen A, B der zweiten Hydromaschine 26 verbunden sind, so dass durch entsprechende Einstellung der Schwenkwinkel der beiden Hydromaschinen 26, 32 die auf den PTO 2 wirkende Dämpfungskraft in der vorbeschriebenen Weise eingestellt werden kann. Bei dem in Figur 5 dargestellten Wandler ist noch eine Ladepumpe 62 vorgesehen, die über die Abtriebswelle 28 angetrieben wird. Diese Ladepumpe 62 kann verwendet werden, um den Vorspannungsdruck im geschlossenen Hydraulikkreislauf einzustellen oder um einen Steuerdruck zur Ansteuerung der nicht dargestellten Steuerelemente des Systems bereit zu stellen.

Figur 6 zeigt einen Wandler 1, der bei einer Windenergieanlage oder einer sonstigen, eine Fluidströmung ausnützenden Anlage eingesetzt werden kann. Dabei treibt ein Windrad 64 in an sich bekannter Weise direkt eine mit konstantem Förder-/Schluckvolumen ausgeführte Hydromaschine 66 an, die in einem geschlossenen Kreislauf mit der zweiten Hydromaschine 26 in der vorbeschriebenen Weise verschaltet ist. Bei angetriebenem Windrad 64 wirkt die Konstant-Hydromaschine 66 wie bei den zuvor beschriebenen Ausführungsbeispielen als Pumpe und treibt die zweite Hydromaschine 26 an. Zur Druckbeaufschlagung des geschlossenen Hydraulikkreislaufes kann wiederum eine Ladepumpe 62 vorgesehen sein. Hinsichtlich des Generators 30, der Hydromaschine 32 und des Hydrospeichers entspricht der Wandler demjenigen nach Figur 5, so dass weitere Erläuterungen entbehrlich sind.

Bei dem Wandler nach Figur 6 wird durch die beiden hydraulisch miteinander verbundenen Hydromaschinen 26 und 66 ein hydrostatisches Getriebe realisiert. Eine Hydromaschine 32 und ein Hydrospeicher 38 können in der in den Figuren 5 und 6 gezeigten Weise auch dann verwendet werden, wenn anstelle des hydrostatischen Getriebes ein mechanisches Getriebe vorgesehen ist. Die Hydromaschine kann dabei wie in den Figuren 5 und 6 in die mechanische Verbindung zwischen einer Ausgangswelle 28 des mechanischen Getriebes und dem Generator 30 eingefügt sein oder auch an einem Nebenabtrieb des mechanischen Getriebes sitzen.

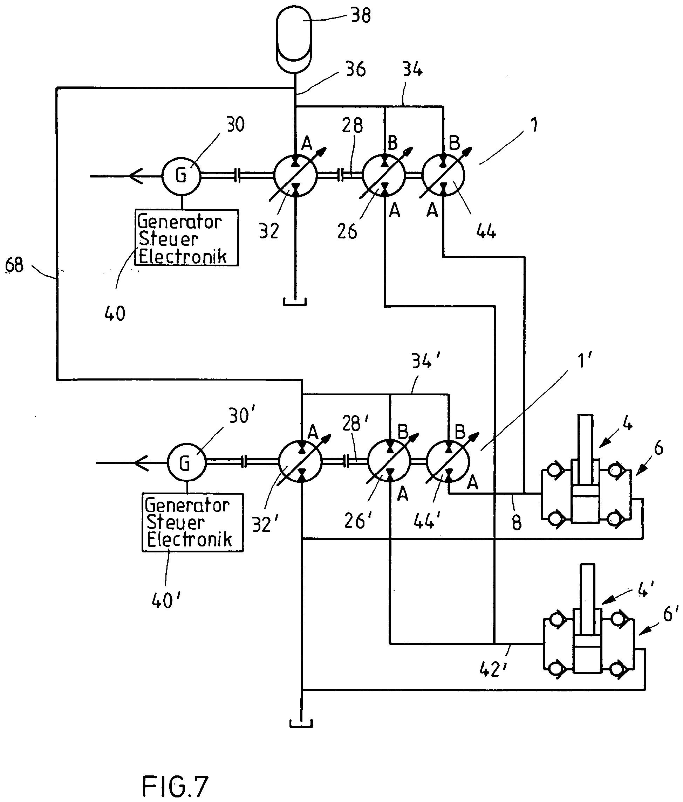

Figur 7 zeigt ein Ausführungsbeispiel einer Wandleranordnung, bei der zwei der vorbeschriebenen erfindungsgemäßen Wandler 1, 1' gemeinsam einer Hydrospeichereinheit 38 zugeordnet sind. Ähnlich wie bei dem Ausführungsbeispiel gemäß Figur 3 ist jeder Wandler 1, 1' mit drei verstellbaren Hydromaschinen 32, 26, 44 bzw. 32', 26', 44' ausgeführt, die über eine gemeinsame Abtriebswelle 28, 28' in Wirkverbindung mit dem zugeordneten Generator 30, 30' stehen. Die Druckseite der Pumpe 4 ist über die Druckleitung 8 einerseits mit dem Anschluss A der dritten Hydromaschine 44' und andererseits mit dem Anschluss A der Hydromaschine 44 des Wandlers 1 verbunden. In entsprechender Weise ist die Druckleitung 42 der Pumpe 4' mit den Anschlüssen A der zweiten Hydromaschine 26, 26' der Wandler 1, 1' verbunden - mit anderen Worten gesagt, die jeweiligen Druckleitungen 8, 42 verzweigen sich zu den Eingangsanschlüssen der zweiten bzw. dritten Hydromaschine 26, 44, 26', 44'. Die weiteren Anschlüsse B der Hydromaschinen 26, 44 und 26', 44' sind dann entsprechend der zuvor beschriebenen Ausführungsbeispiele jeweils mit der zugeordneten Zulaufleitung 34, 34' des Wandlers 1 bzw. 1' verbunden. Von der mit dem Anschluss A der ersten Hydromaschine 32 verbundenen Zulaufleitung 34 des Wandlers 1 zweigt - wie bei den Ausführungsbeispielen gemäß den Figuren 1 und 3 - die Speicherleitung 36 ab, an die die Hydrospeichereinheit 38 angeschlossen ist. In entsprechender Weise zweigt von der Zulaufleitung 34' des Wandlers 1' eine Speicherverbindungsleitung 68 ab, die in die Speicherleitung 36 einmündet, so dass die Hydrospeichereinheit 38 in Druckmittelverbindung mit den Anschlüssen A der ersten Hydromaschinen 32, 32' und den Anschlüssen B der zweiten Hydromaschinen 26, 44, 26', 44' steht. Über die Steuereinheiten 40, 40' oder eine gemeinsame Steuereinheit 40 werden dann die Schwenkwinkel der genannten Hydromaschinen 32, 26, 44, 32', 26', 44' analog zur vorbeschriebenen Verfahrensweise so eingestellt, dass am jeweiligen Generator 30, 30' eine im wesentlichen konstante elektrische Leistung abgegriffen wird, wobei ein entsprechender Dämpfungsdruck in den Druckleitungen 8, 42 eingeregelt wird.

Selbstverständlich kann die Wandleranordnung gemäß Figur 7 auch mit mehr als zwei Wandlern ausgeführt sein.

Im Prinzip können die Varianten gemäß den Figuren 1 bis 6 auch auf eine Wandleranordnung gemäß Figur 7 übertragen werden.

Offenbart sind ein hydraulisch elektrischer Wandler, eine Wandleranordnung mit mehreren derartigen Wandlern und ein Verfahren zum Ansteuern eines hydraulisch elektrischen Wandlers, bei denen zwei verstellbare Hydromaschinen jedes Wandlers derart angesteuert wird, dass in einer Druckleitung einer Pumpe eines PTO ein vorbestimmter Dämpfungsdruck in Abhängigkeit von der in den PTO eingetragenen mechanischen Leistung eingeregelt wird.

Bezugszeichenliste:

| | |
|---|---|
| 1 | Wandler |
| 2 | PTO |
| 4 | Pumpe |
| 6 | Gleichrichter |
| 8 | Druckleitung |
| 10 | Tankleitung |
| 12 | Rückschlagventil |
| 14 | Rückschlagventil |
| 16 | Rückschlagventil |
| 18 | Rückschlagventil |
| 20 | Druckraum |
| 22 | Ringraum |
| 24 | Kolben |
| 26 | zweite Hydromaschine |
| 28 | Abtriebswelle |
| 30 | Generator |
| 32 | erste Hydromaschine |
| 34 | Zulaufleitung |
| 36 | Speicherleitung |
| 38 | Hydrospeichereinheit |
| 40 | Steuereinheit |

42 weitere Druckleitung
44 dritte Hydromaschine
46 Speicherzweigleitung
48 zusätzliche Motor-/Generator-Einheit
50 Zusatzgenerator
52 Zusatzhydromaschine
54 Druckraum
56 Druckraum
58 Arbeitsleitung
60 Arbeitsleitung
62 Ladepumpe
64 Windrad
66 Konstanthydromaschine
68 Speicherverbindungsleitung

## Patentansprüche

1. Hydraulisch-elektrischer Wandler mit einem vorzugsweise von einer Naturkraft angetriebenen PTO (2), der eine Pumpe (4, 4') hat, mit einer Hydrospeichereinheit (38) und mit einer ersten Hydromaschine (32, 32'), die mit der Hydrospeichereinheit in fluidischer Verbindung steht und von der eine elektrische Maschine, vorzugsweise ein Generator (30, 30') antreibbar ist, und mit einer zweiten Hydromaschine (26, 26'), die mit der ersten Hydromaschine (32, 32') mechanisch und mit der Pumpe (4, 4') fluidisch gekoppelt ist, über die die elektrische Maschine ebenfalls antreibbar ist und die zum Aufladen der Hydrospeichereinheit nutzbar ist, wobei die Förder-/Schluckvolumina der beiden Hydromaschinen (32, 32'; 26, 26') zum Vergleichmäßigen der abgegriffenen elektrischen Leistung an der elektrischen Maschine verstellbar ausgeführt sind, **dadurch gekennzeichnet, dass** beide Hydromaschinen (32, 26; 32', 26') hydraulisch in Reihe geschaltet sind, wobei die zweite Hydromaschine (26, 26') stromaufwärts angeordnet ist und die Hydrospeichereinheit (38) mit dem Druck zwischen der ersten (32, 32') und der zweiten Hydromaschine (26, 26') beaufschlagt ist.

2. Wandler nach Patentanspruch 1, wobei ein Anschluss (B) der ersten Hydromaschine (32, 32') mit einem Tank (T) oder Niederdruck verbunden ist.

3. Wandler nach einem der vorhergehenden Patentansprüche, mit einem weiteren PTO (2'), dem eine weitere dritte Hydromaschine (44, 44') zugeordnet ist, die ebenfalls mit der elektrischen Maschine in Wirkverbindung steht und die hydraulisch parallel zur zweiten Hydromaschine (26, 26') geschaltet ist, wobei Anschlüsse (B) der zweiten und der dritten Hydromaschine (26, 44; 26', 44') mit einem Anschluss (A) der ersten Hydromaschine (32, 32') verbunden sind.

4. Wandler nach einem der vorhergehenden Patentansprüche, wobei der Hydrospeichereinheit (38) eine zusätzliche Motor-/Generator-Einheit (48) mit einem Zusatzgenerator (50) und einer Zusatzhydromaschine (52) zugeordnet ist, die über die Hydrospeichereinheit (38) antreibbar ist.

5. Wandler nach einem der vorhergehenden Patentansprüche, wobei zumindest die zweite Hydromaschine (26, 26') in einem hydraulisch geschlossenen Kreislauf angeordnet ist.

6. Wandler nach Patentanspruch 5, mit einer von den Hydromaschinen (26, 32) angetriebenen Ladepumpe (62).

7. Wandler nach einem der vorhergehenden Patentansprüche, wobei der PTO (2) wellen- oder windbetrieben ist.

8. Wandler nach einem der vorhergehenden Patentansprüche, wobei die Hydrospeichereinheit (38) mehrere parallel geschaltete Hydrospeicher hat.

9. Wandleranordnung mit mehreren Wandlern nach einem der vorhergehenden Patentansprüche, wobei eine Hydrospeichereinheit (38) beiden Wandlern (1, 1') zugeordnet ist.

10. Verfahren zum Ansteuern eines hydraulisch elektrischen Wandlers mit einem vorzugsweise von einer Naturkraft angetriebenen PTO (2), der eine Pumpe (4, 4') hat, mit einer Hydrospeichereinheit (38) und mit einer ersten Hydromaschine (32, 32'), die mit der Hydrospeichereinheit (38) in fluidischer Verbindung steht und von der eine elektrische Maschine, vorzugsweise ein Generator (30, 30') antreibbar ist und mit einer zweiten Hydromaschine (26, 26'), die mit der ersten Hydromaschine (32, 32') mechanisch und mit der Pumpe (4, 4') fluidisch gekoppelt ist, über die die elektrische Maschine ebenfalls antreibbar ist und die zum Aufladen der Hydrospeichereinheit (38) nutzbar ist, wobei beide Hydromaschinen (32, 26; 32', 26') hydraulisch in Reihe geschaltet sind, wobei die zweite Hydromaschine (26, 26') stromaufwärts angeordnet ist und die Hydrospeichereinheit (38) mit dem Druck zwischen der ersten und der zweiten Hydromaschine beaufschlagt ist, wobei das Förder-/Schluckvolumen der beiden verstellbaren Hydromaschinen (32, 26; 32', 26') in Abhängigkeit von der in den PTO (2) eingetragenen Leistung derart verstellt wird, dass eine im wesentlichen konstante Leistung an der elektrischen Maschine abgegriffen werden kann.

**11.** Verfahren nach Patentanspruch 10 mit den Schritten:

- Bestimmen des momentanen Volumenstroms (FlowW) am Ausgang der Pumpe (4, 4');
- Berechnen des Förder-/Schluckvolumens (Disp1) der ersten Hydromaschine (32, 32');
- Bestimmen des entsprechenden erforderlichen Dämpfungsdruckes (Press1) am Ausgang der Pumpe (4, 4');
- Ermitteln des Drucks (Press2) in der Hydrospeichereinheit (38);
- Berechnen des erforderlichen Drehmomentes (Torque1) aus dem Förder-/Schluckvolumen (Disp1), einer Druckdifferenz zwischen Tankdruck (Press2) und Dämpfungsdruck (Press1);
- Bestimmen der erforderlichen Leistungsabgabe (Power Output) der elektrischen Maschine, und
- Verstellen des Förder-/Schluckvolumens (Disp2) der zweiten Hydromaschine (26, 26') bis sich die gewünschte Leistungsabgabe (Power Output) an der elektrischen Maschine einstellt.

**Claims**

**1.** Hydroelectric converter having a PTO (2) which is preferably driven by a natural force and has a pump (4, 4'), having a hydraulic accumulator unit (38) and having a first hydraulic machine (32, 32') which is fluidically connected to the hydraulic accumulator unit and by which an electric machine, preferably a generator (30, 30') can be driven, and having a second hydraulic machine (26, 26'), which is mechanically coupled to the first hydraulic machine (32, 32') and fluidically coupled to the pump (4, 4'), via which the electric machine can likewise be driven and which can be used for charging the hydraulic accumulator unit, the delivery/displacement volumes of the two hydraulic machines (32, 32'; 26, 26') being of adjustable configuration in order to homogenize the tapped-off electrical power at the electric machine, **characterized in that** both hydraulic machines (32, 26; 32', 26') are connected in series hydraulically, the second hydraulic machine (26, 26') are arranged upstream and the hydraulic accumulator unit (38) being loaded with the pressure between the first (32, 32') and the second hydraulic machine (26, 26').

**2.** Converter according to Patent Claim 1, a connection (B) of the first hydraulic machine (32, 32') being connected to a tank (T) or low pressure.

**3.** Converter according to one of the preceding patent claims, having a further PTO (2') which is assigned a further third hydraulic machine (44, 44') which is likewise operatively connected to the electric machine and is connected hydraulically in parallel to the second hydraulic machine (26, 26'), connections (B) of the second and the third hydraulic machine (26, 44; 26', 44') being connected to a connection (A) of the first hydraulic machine (32, 32').

**4.** Converter according to one of the preceding patent claims, the hydraulic accumulator unit (38) being assigned an additional motor/generator unit (48) with an additional generator (50) and an additional hydraulic machine (52) which can be driven via the hydraulic accumulator unit (38).

**5.** Converter according to one of the preceding patent claims, at least the second hydraulic machine (26, 26') being arranged in a hydraulically closed circuit.

**6.** Converter according to Patent Claim 5, having a charge pump (62) which is driven by the hydraulic machines (26, 32).

**7.** Converter according to one of the preceding patent claims, the PTO (2) being wave-operated or wind-operated.

**8.** Converter according to one of the preceding patent claims, the hydraulic accumulator unit (38) having a plurality of hydraulic accumulators which are connected in parallel.

**EP 2 694 803 B1**

9. Converter arrangement having a plurality of converters according to one of the preceding patent claims, a hydraulic accumulator unit (38) being assigned to both converters (1, 1').

10. Method for actuating a hydroelectric converter having a PTO (2) which is preferably driven by a natural force and has a pump (4, 4'), having a first hydraulic accumulator unit (38) and having a first hydraulic machine (32, 32') which is fluidically connected to the hydraulic accumulator unit (38) and by which an electric machine, preferably a generator (30, 30') can be driven, and having a second hydraulic machine (26, 26'), which is mechanically coupled to the first hydraulic machine (32, 32') and fluidically coupled to the pump (4, 4'), via which the electric machine can likewise be driven and which can be used for charging the hydraulic accumulator unit (38), both hydraulic machines (32, 26; 32' 26') being connected in series hydraulically, the second hydraulic machine (26, 26') being arranged upstream and the hydraulic accumulator unit (38) being loaded with the pressure between the first and the second hydraulic machine, the delivery/displacement volume of the two adjustable hydraulic machines (32, 26; 32', 26') being adjusted depending on the power which is input into the PTO (2), in such a way that a substantially constant power output can be tapped off at the electric machine.

11. Method according to Patent Claim 10 having the following steps:

- determination of the instantaneous volumetric flow (FlowW) at the outlet of the pump (4, 4');
- calculation of the delivery/displacement volume (Disp1) of the first hydraulic machine (32, 32');
- determination of the corresponding required damping pressure (Press1) at the outlet of the pump (4, 4');
- determination of the pressure (Press2) in the hydraulic accumulator unit (38);
- calculation of the required torque (Torque1) from the delivery/displacement volume (Disp1), a pressure difference between tank pressure (Press2) and damping pressure (Press1);
- determination of the required power output (Power Output) of the electric machine, and
- adjustment of the delivery/displacement volume (Disp2) of the second hydraulic machine (26, 26') until the desired power output (Power Output) is set at the electric machine.

**Revendications**

1. Convertisseur hydraulique-électrique présentant
un PTO ("Power Take Off" - dispositif de prélèvement d'énergie) (2) entraîné de préférence par une force naturelle et qui possède une pompe (4, 4'), une unité (38) de réservoir hydraulique,
une première machine hydraulique (32, 32') en communication d'écoulement avec l'unité de réservoir hydraulique et apte à être entraînée par une machine électrique, de préférence un générateur (30, 30'), et
une deuxième machine hydraulique (26, 26') accouplée mécaniquement à la première machine hydraulique (32, 32') et hydrauliquement à la pompe (4, 4'), par laquelle la machine électrique peut également être entraînée et qui peut être utilisée pour charger l'unité de réservoir hydraulique, les débits refoulés et/ou aspirés par les deux machines hydrauliques (32, 32'; 26, 26') pouvant être ajustés pour égaliser les puissances électriques consommées par les machines électriques,
**caractérisé en ce que**
les deux machines électriques (32, 26; 32', 26') sont raccordées hydrauliquement en série, la deuxième machine hydraulique (26, 26') étant disposée en amont et la pression régnant entre la première machine hydraulique (32, 32') et la deuxième machine hydraulique (26, 26') étant appliquées sur l'unité (38) de réservoir hydraulique.

2. Convertisseur selon la revendication 1, dans lequel un raccordement (B) de la première machine hydraulique (32, 32') est raccordé à un réservoir (T) ou à une basse pression.

3. Convertisseur selon l'une des revendications précédentes, présentant un autre PTO (2') auquel est associée une autre troisième machine hydraulique (44, 44') qui coopère également avec la machine électrique et qui est raccordée hydrauliquement en parallèle à la deuxième machine hydraulique (26, 26'), des raccordements (B) de la deuxième et de la troisième machine hydraulique (26, 44; 26', 44') étant reliés à un raccordement (A) de la première machine hydraulique (32, 32').

4. Convertisseur selon l'une des revendications précédentes, dans lequel une unité supplémentaire (48) de moteur/générateur présentant un générateur supplémentaire (50) et une machine hydraulique supplémentaire (52) est associée à l'unité (38) de réservoir hydraulique et peut être entraînée par l'intermédiaire de l'unité (38) de réservoir hydraulique.

10

5. Convertisseur selon l'une des revendications précédentes, dans lequel au moins la deuxième machine hydraulique (26, 26') est disposée dans un circuit hydraulique fermé.

6. Convertisseur selon la revendication 5, présentant une pompe de chargement (62) entraînée par les machines hydrauliques (26, 32).

7. Convertisseur selon l'une des revendications précédentes, dans lequel le PTO (2) est entraîné par les vagues ou le vent.

8. Convertisseur selon l'une des revendications précédentes, dans lequel l'unité (38) de réservoir hydraulique possède plusieurs réservoirs hydrauliques raccordés en parallèle.

9. Ensemble de convertisseur présentant plusieurs convertisseurs selon l'une des revendications précédentes, dans lequel une l'unité (38) de réservoir hydraulique est associée aux deux convertisseurs (1, 1').

10. Procédé de commande d'un convertisseur hydraulique-électrique présentant
un PTO ("Power Take Off" - dispositif de prélèvement d'énergie) (2) entraîné de préférence par une force naturelle et qui possède une pompe (4, 4'), une unité (38) de réservoir hydraulique,
une première machine hydraulique (32, 32') en communication d'écoulement avec l'unité (38) de réservoir hydraulique et apte à être entraînée par une machine électrique, de préférence un générateur (30, 30'), et
une deuxième machine hydraulique (26, 26') accouplée mécaniquement à la première machine hydraulique (32, 32') et hydrauliquement à la pompe (4, 4'), par laquelle la machine électrique peut également être entraînée et qui peut être utilisée pour charger l'unité (38) de réservoir hydraulique,
les deux machines électriques (32, 26; 32', 26') étant raccordées hydrauliquement en série, la deuxième machine hydraulique (26, 26') étant disposée en amont et la pression régnant entre la première machine hydraulique et la deuxième machine hydraulique étant appliquées sur l'unité (38) de réservoir hydraulique,
les débits refoulés et/ou aspirés par les deux machines hydrauliques (32, 26; 32', 26') pouvant être ajustés en fonction de la puissance injectée dans le PTO (2) pour que la puissance électrique prélevée sur les machines électriques puisse être essentiellement constante.

11. Procédé selon la revendication 10, présentant les étapes qui consistent à :

- déterminer le débit volumique instantané (FlowW) à la sortie de la pompe (4, 4'),
- calculer le débit refoulé et/ou aspiré (Disp 1) de la première machine hydraulique (32, 32'),
- déterminer la pression d'amortissement nécessaire appropriée (Press 1) à la sortie de la pompe (4, 4'),
- détermination de la pression (Press 2) qui règne dans la l'unité (38) de réservoir hydraulique,
- calculer le couple de rotation nécessaire (Torque 1) à partir du débit refoulé et/ou aspiré (Disp 1) et de la différence de pression entre la pression de réservoir (Press 2) et la pression d'amortissement (Press 1),
- déterminer la puissance qui doit être délivrée (Power Output) par la machine électrique et
- ajuster le débit refoulé et/ou aspiré (Disp2) de la deuxième machine hydraulique (26, 26') jusqu'à ce que la puissance délivrée souhaitée (Power Output) s'établisse sur la machine électrique.

FIG.1

FIG. 2

FIG.3

FIG.4

FIG.5

FIG.6

14

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6300698 B
- DE 102007018600 A1
- DE 102008021576 A1
- DE 102007056400
- WO 2011011682 A2
- JP 2002142498 A
- DE 102009016916 A1